# EUROPEAN PATENT SPECIFICATION

(11) **EP 0 970 288 B1**
(45) Date of publication and mention of the grant of the patent: **24.07.2002**
(21) Application number: 98905604.9
(22) Date of filing: 04.03.1998
(51) Int. Cl.: E05B 49/00

(54) **DATA TRANSMISSION SYSTEM AND COMPONENTS THEREOF**
DATENÜBERTRAGUNGSSYSTEM UND BESTANDTEILE DAFÜR
SYSTEME DE TRANSMISSIONS DE DONNEES ET COMPOSANTS DE CELUI-CI

(30) Priority: 07.03.1997 IL 12039397; 30.05.1997 IL 12095797
(43) Date of publication of application: 12.01.2000
(73) Proprietor: Goldman, Ilan, 46631 Herzliya (IL)
(72) Inventor: Goldman, Ilan, 46631 Herzliya (IL)
(74) Representative: Moncheny, Michel
(86) International application number: PCT/IL98/00105
(87) International publication number: WO 98/39539

(56) References cited:
- EP-A- 0 261 768
- DE-C- 19 615 932
- US-A- 4 197 524
- US-A- 4 780 856

## Description

### FIELD OF THE INVENTION

The invention relates to data transmission systems in general and to impact responsive access control systems in particular.

### BACKGROUND OF THE INVENTION

In US Patent 4,197,524 to Salem, there is illustrated and described a tap actuated lock for installing on a door's inside surface which is opened when an access combination is tapped on its outside surface. The taps are detected by an impact sensitive device which produces a sensible output in response to an impact. A typical access combination is a four-number code, for example, 4,3,2,5 which requires the tapping of a first set of four taps, a relatively long pause, the tapping of a second set of three taps, a second relatively long pause, the tapping of a third set of two taps, a third relatively long pause and finally the tapping of a fourth and last set of five taps. Such a procedure takes a relatively long time, in fact, anywhere between about 10 to 20 seconds and renders the access combination relatively insecure.

### SUMMARY OF THE INVENTION

In accordance with the present invention, there is provided a data transmission system according to Claim 1, a data transmitting device according to Claim 12, and a method of data transmission according to Claim 21.

A data transmission system of the present invention is suitable for a wide range of both unidirectional data transmission applications, for example, transmitting readings constituting data from a sensor or a detector to data collection equipment, transmitting control signals constituting data to actuable components, for example, a solenoid, a motor, a valve and the like and bidirectional data transmission applications. Thus, envisaged applications include, but are not limited to, those in respect of which conventional wired and remote control data transmission systems may be not convenient to install or suitable to operate, for example, transmitting data respectively through and across the walls of a sealed or pressurized container or a reinforced concrete wall.

In a data transmission system of the present invention, data is preferably encoded as the time intervals between consecutive impacts thereby defining an *"average impact baud rate"*, namely, the average number of impacts per second. For example, in the case of a solenoid driven impeller head whose minimum and maximum time intervals between consecutive impacts is 30 msec and 100 msec, respectively, and the minimum time interval increment between consecutive impacts is about 1 msec, there are 70 distinguishable intervals each of which can represent an instruction code, a data reading, and the like. With such a solenoid driven impeller head, the average impact baud rate is about 20 impacts per second, however, it is envisaged an average impact baud rate of a data transmission system of the present invention can be considerably increased.

A data transmission system of the present invention is particularly suitable for implementation in access control applications, for example, to open a mortise lock, to open a bank safe, to obtain entry into a computerized communication and control network e.g. at an automatic teller machine (ATM) and the like. In such applications, a data transmitting device effectively constitutes an electronically controlled key for typically impacting a single encoded series of impacts, namely, an access combination. In these and other applications, an encoded series of impacts includes, for example, a four interval access combination of 30, 45, 55 and 62 msec which can be transmitted in less than a quarter of a second and is one of a total of 70⁴ (i.e. more than 25 million) combinations.

### BRIEF DESCRIPTION OF THE DRAWINGS

For a better understanding of the invention and to show how the same may be carried out in practice, by way of non-limiting examples, reference will now be made to the accompanying drawings, in which:
**Fig. 1** is a schematic block diagram of a data transmission system of the present invention;
**Fig. 2** is a pictorial representation of an access control system including an electronic mortise lock and a hand-held, pen-like electronic key;
**Figs. 3** and **4** are respectively a cross sectional view and a block diagram of the electronic key of Figure 2;
**Figs. 5** and **6** are graphical representations of different types of encoded series of discrete mechanical impacts;
**Figs. 7** and **8** are pictorial representations of the electronic mortise lock of Figure 2 and a data transmitting device respectively activated by a touch keypad and a remote control;
**Fig. 9** is a pictorial representation of an electronic combination padlock and the hand-held, pen-like electronic key of Figure 2;
**Fig. 10** is a cross sectional view of a data transmitting/receiving device;
**Fig. 11** is a block diagram of a data transmission system of the present invention for transmitting data from a sensing means to a data collection means;
**Fig. 12** is a block diagram of a data transmission system of the present invention for transmitting data from a control means to an actuable component; and
**Fig. 13** is a block diagram of a data transmission system of the present invention for transmitting data between two data processing systems.

### DETAILED DESCRIPTION OF THE PREFERRED EMBODIMENTS

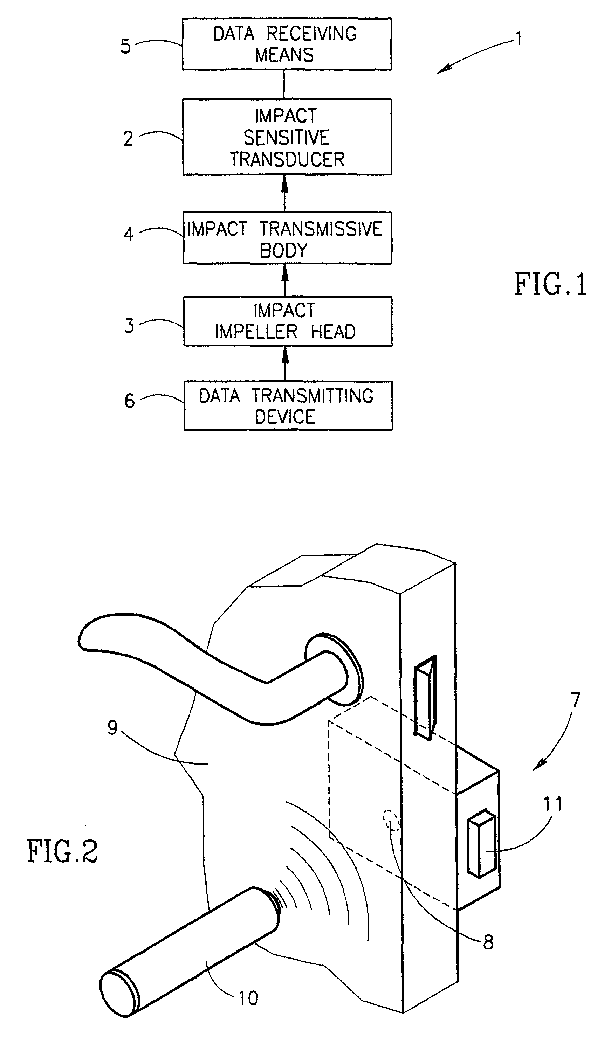

With reference now to the drawings, Figure 1 shows a data transmission system 1 including an impact sensitive transducer 2 for sensing vibrations resultant of impacts from an impact impeller head 3 transmitted through an impact transmissive body 4 interdisposed therebetween, the impact sensitive transducer 2 being associated with a data receiving device 5 and the impact impeller head 3 being associated with a data transmitting device 6.

Turning now to Figure 2, there is shown an electronic mortise lock 7 including a data receiving device (not shown) coupled to a microphone 8 adapted for intimate juxtaposition against the inside surface of a solid door 9. The door may be opened by a hand-held, pen-like electronic key 10 constituting a data transmitting device.

In operation, the microphone 8 picks up vibrations at the door's inside surface which are the result of the impacts against the door's outside surface from the electronic key 10. The vibrations are suitably processed and then compared to an access combination for selectively operating a motor or solenoid (not shown) to drive a dead bolt 11 between a locking operative position and an unlocking operative position when the encoded series of impacts matches the access combination.

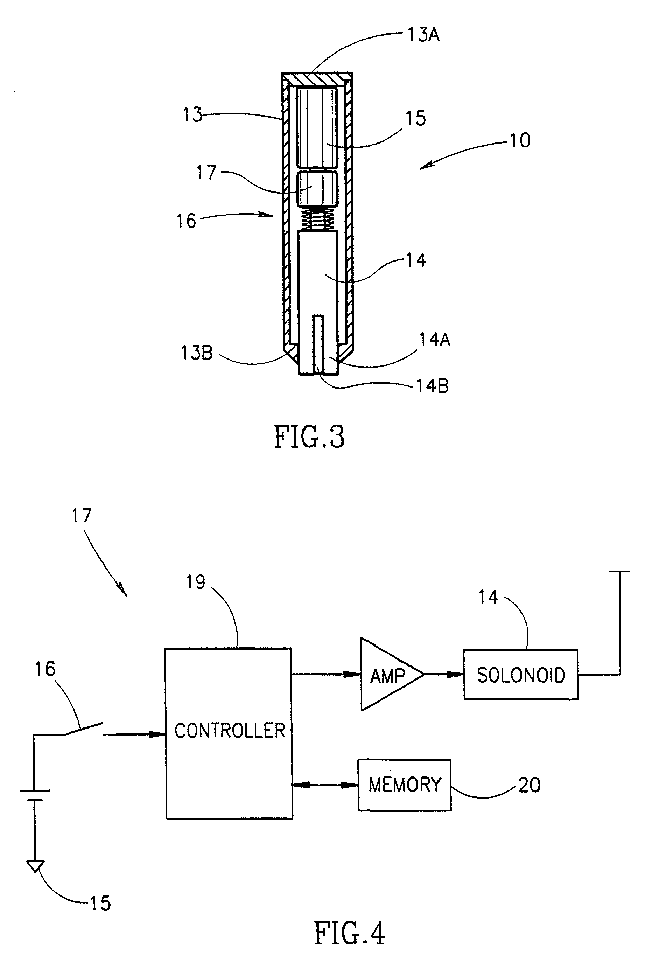

As shown in Figures 3 and 4, the electronic key 10 includes a tubular housing 13 with a closed rear end 13A and an open front end 13B from which extends a tubular leading portion 14A of an electromagnetic device 14, e.g. a push-type solenoid, having a reciprocable pneumatic hammer type impeller head 14B. Interdisposed between the rear end 13A and the push-type solenoid 14 is a battery 15 and a normally open spring biased switch 16 which is closed on depressing the tubular leading portion 14A at key 10 against an impact receiving surface i.e. a door. On closing the switch 16, power is provided to electronic circuitry 17 including a controller 19 for activating the solenoid 14 in accordance with a predetermined code stored in a memory 20.

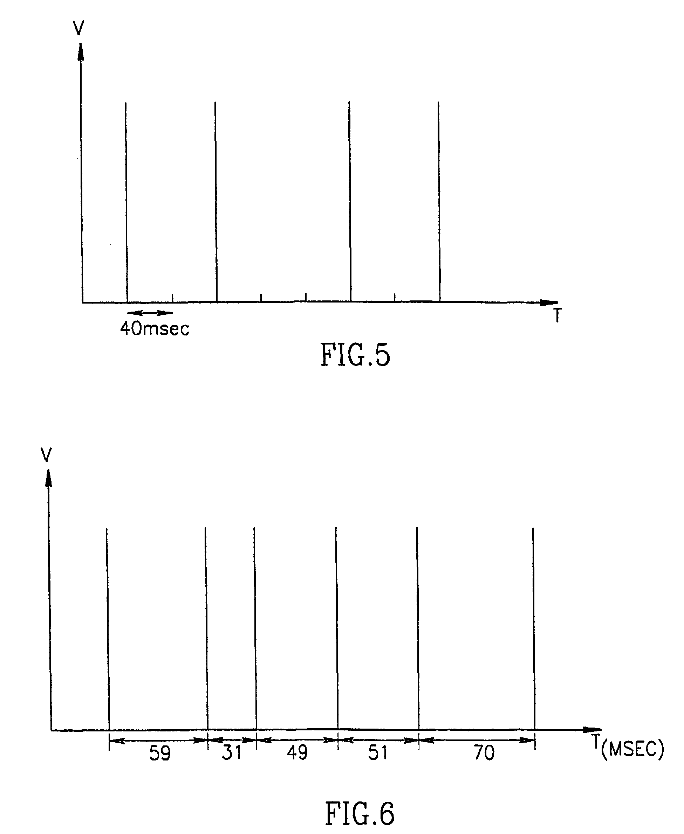

The key 10 is designed to impact an encoded series of impulse-like, high energy impacts as a function of the presence of absence of impacts at a predetermined impact rate (see Figure 5) or time intervals between consecutive impacts (see Figure 6). For example, Figure 5 shows an access combination 10100101 where 1 is representative of the presence of an impact and 0 is representative of the absence of an impact whilst Figure 6 shows an access combination 59, 31, 49, 51, and 70 msec corresponding to the time intervals between consecutive impacts.

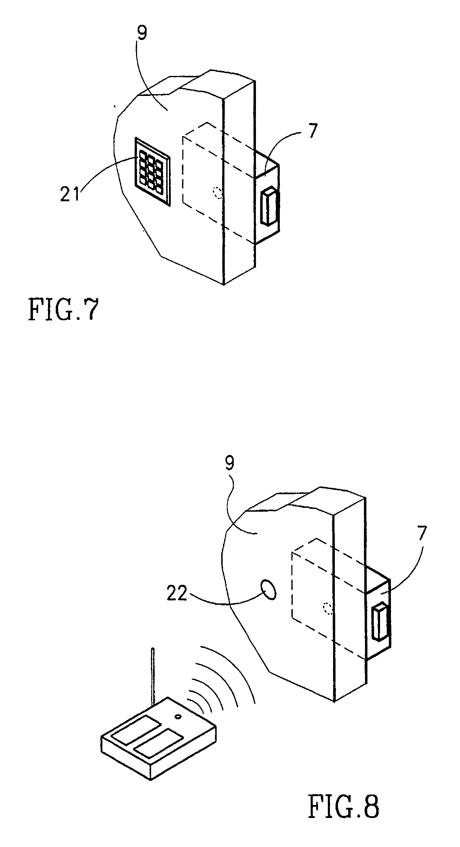

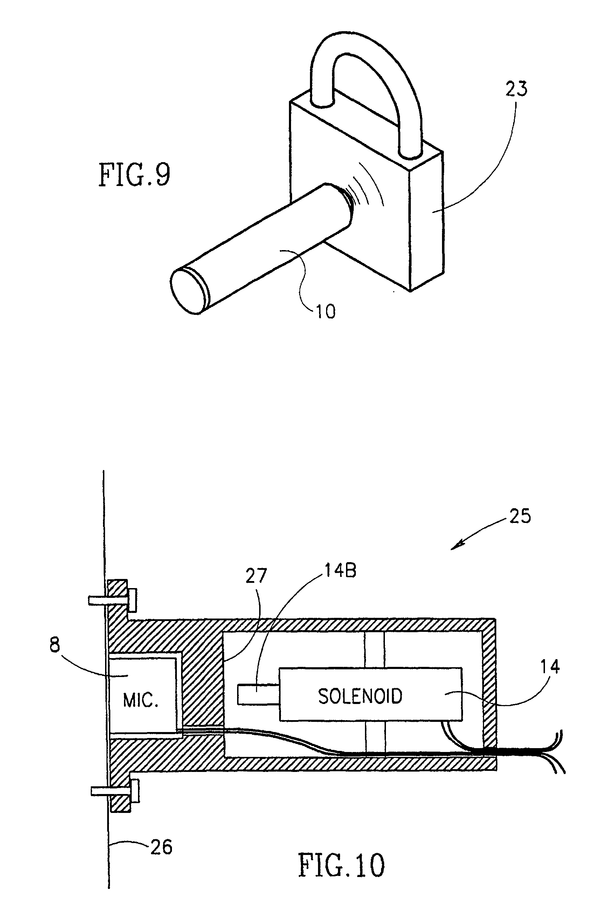

Figure 7 shows the electronic mortise lock 7 opened by a data transmitting device 21 including an impact impeller head activated by a touch keypad. Figure 8 shows the electronic mortise lock 7 opened by a data transmitting device 22 including an impact impeller device activated by remote control. Figure 9 shows an electronic combination padlock 23 opened by the electronic key 10.

For use in bidirectional data transmitting systems, Figure 10 shows a data transmitting/receiving device 25 including a push-type solenoid 14 and a microphone 8, the former having a reciprocable impeller head 14B for indirectly impacting against an impact transmissive body 26 via an interior wall 27 of the device.

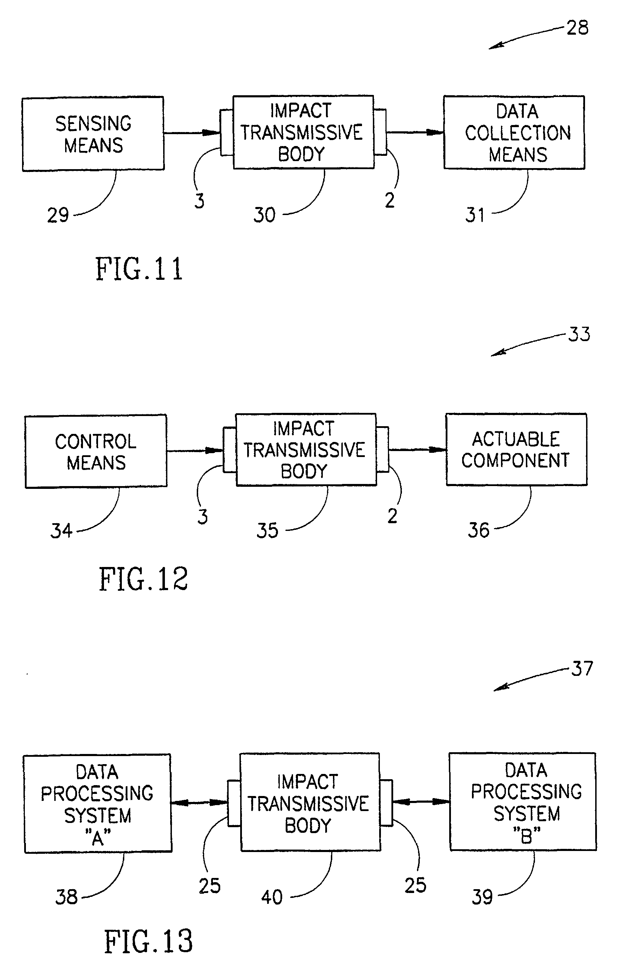

Figure 11 shows a data transmission system 28 for transmitting data from a sensing means 29 to a data collection means 31 via an impact impeller device 3 and an impact sensitive transducer 2 disposed on opposite sides of an impact transmissive body 30.

Figure 12 shows a block diagram of a data transmission system 33 for transmitting data from a control means 34 to an actuable component 36 via an impact impeller device 3 and an impact sensitive transducer 2 disposed on opposite sides of an impact transmissive body 35.

Figure 13 shows a data transmission system 37 for transmitting data between a pair of data processing systems "A" and "B" 38 and 39 via a pair of transmitting/receiving devices 25 disposed on opposite sides of an impact transmissive body 40.

While the invention has been described with respect to a limited number of embodiments, it will be appreciated that many variations, modifications and other applications of the invention may be made. For example, instead of a microphone, an impact sensitive transducer can be implemented by a piezoelectric device, and the like. Data transmission can be encrypted in accordance with conventional data encryption standards. In addition, for example, in control access applications where access combinations are necessarily matching, they can be periodically updated using conventional algorithm based combination generators hitherto incorporated in vehicle security systems, burglar systems and the like.

## Claims

1. A data transmission system comprising a data receiving device (5), having an impact sensitive transducer (2) for picking up received vibrations, **characterized in that**:
**(a)** there is provided a data transmitting device (6), which comprises an electronically controlled electromagnetic device with an impact impeller head (3) which can reciprocate so as to Impact an impact transmissive body (4) and transmit to said body (4) a series of impulse-like mechanical impacts, said data being encoded as time intervals between consecutive impacts of said series;
**(b)** the impact sensitive transducer (2) is able to pick up, from the impact transmissive body (4), vibrations resulting from said series of impulse-like mechanical impacts for subsequently decoding said data.

2. A system according to claim 1, wherein said data is encoded by presence or absence of impacts at a predetermined impact rate.

3. A system according to claim 1 or 2, wherein said data receiving device (5) is responsive to an average impact baud rate of greater than 20 impacts per second.

4. A system according to any one of claims 1 to 3, wherein said data transmissing device (6) comprises a solenoid-driven impeller head (3) for transmitting said mechanical impacts to said body (4).

5. a system according to any one of claims 1 to 4, wherein said data transmitting device forms part of a sensing means (29), said series of impacts encodes information on a sensed parameter and said data receiving device forms part of a data-collection means (31) for collecting the sensed information.

6. A system according to any one of claims 1 to 4, wherein said data transmitting device forms part of a control module (34), said series of impacts encodes control data and said data receiving device is associated with an actuatable component (36) which is actuated upon receipt of an actuation data transmitted by said control module (34).

7. A system according to claim 6, wherein said control module is an electronically controlled key (10) for impacting an encoded series of impacts encoding an access combination data and said actuatable component is an access controller.

8. A system according to claim 7, wherein said access controller is a lock (7).

9. A system according to any one of claims 1 to 4, for transmitting data between two or more data processing systems (38, 39), wherein the data transmitting device is part of a first data processing system and the data receiving device is part of a second processing system and wherein the first data processing system further comprises a data receiving device which is identical to the data receiving device and the second data processing system also comprises a data transmitting device which is identical to the data transmitting device.

10. A system according to any one of claims 1 to 8, wherein said data transmitting device is configured to be hand-held.

11. A system according to any one of claims 1 to 10, comprising a remote control for activating the series of impacts.

12. A data transmitting device (6) for communication with a data receiving device (5), the data transmitting device (6) comprising an electronically controlled electromagnetic device with an impact impeller head (3) which can reciprocate in a coded fashion so as to impact an impact transmissive body (4) and transmit to said body (4) a series of impulse-like mechanical Impacts to be picked up by an impact sensitive transducer (2) of the data receiving device (5), the series of impacts encoding data to be transmited from the transmitting device (6) to the receiving device (5), the data being encoded as time intervals between consecutive impacts of the series.

13. A data transmitting device (6) according to claim 12, wherein said data is encoded by presence or absence of impacts at a predetermined impact rate.

14. A data transmitting device (6) according to claim 12 or 13, wherein said data is encoded at an impact baud rate of greater than 20 impacts per second.

15. A data transmitting device (6) according to any one of claims 12 to 14, comprising a solenoid-driven impeller head (3) for transmitting said mechanical impacts to said body (4).

16. A data transmitting device (6) according to any one of claims 12 to 15, serving as an electronically controlled key (10), wherein the series of impacts encodes an access combination data.

17. A data transmitting device (6) according to any one of claims 12 to 16, being configured to be hand-held.

18. A data transmitting device (6) according to any one of claims 12 to 17, comprising a user interface for activating said series of impacts.

19. A device according to any one of claims 12 to 16, comprising a remote control for activating said series of impacts.

20. A device according to any one of claims 12 to 19, wherein said device comprises said data receiving device.

21. A method of data transmission to a data receiving device (5), comprising an impact sensitive transducer (2), by which received vibrations are picked up, **characterized by**:
**(a)** in a data transmitting device (6), encoding said data into a series of impulse-like mechanical impacts, the data being encoded as time intervals between consecutive impacts of said series by means of an electronically-controlled electromagnetic device with an impeller head (3) which can reciprocate so as to impact an impact transmissive body (4), and impacting said impacts onto said impact transmissive body (4);
**(b)** in the data receiving device (5) having the impact sensitive transducer (2), picking up, from said body (4), vibrations resulting from said series of impulse-like mechanical impacts and decoding said data.

22. A method according to claim 21, wherein the data is encoded into presence or absence of impacts at a predetermined impact rate.

23. A method according to claim 21 or 22, wherein the impacts have an average baud rate of 20 impacts per second or more.

24. A method according to any one of claims 21 to 23, wherein the data transmitting device forms part of a sensing means (29), said data receiving device forms part of a data collection means (31) and said series of impacts encodes information on a sensed parameter.

25. A method according to any one of claims 21 to 23, wherein the data transmitting device forms part of a control module (34), said data receiving device is associated with an actuatable component (36), said series of impacts encoding control data for actuation of said actuatable component (36).

26. A method according to claim 25, wherein the control module is an electronically controlled key (10), said actuatable component is an access controller, and said series of impacts encodes an access combination data.

27. A method according to any one of claims 21 to 23, wherein said data transmission device and said data receiving device are each associated with a data processing system, and said series of impacts encodes data to be transmitted from the data transmitting device in one data processing system to the data receiving device in another data processing system.

## Patentansprüche

1. Datenübertragungs-System, aufweisend eine Datenempfangs-Einrichtung (5), die einen aufschlagempfindlichen Messwandler (2) zum Aufnehmen von empfangenen Vibrationen aufweist, **dadurch gekennzeichnet, dass**:
(a) eine Datenübertragungseinrichtung (6) vorgesehen ist, die eine elektronisch gesteuerte elektromagnetische Einrichtung mit einem aufschlagenden Triebkopf (3) aufweist, der sich hin- und her bewegen kann, um auf einen Aufschlagübertragungskörper (4) aufzuschlagen und um eine Folge von impulsförmigen, mechanischen Aufschlägen auf den Körper (4) zu übertragen, wobei die Daten als Zeitintervalle zwischen aufeinanderfolgenden Aufschlägen der Folge kodiert werden;
(b) der aufschlagempfindliche Messwandler (2) befähigt ist, von dem Aufschlagübertragungskörper (4) Vibrationen aufzunehmen, die von der Folge.von impulsförmigen mechanischen Aufschlägen resultieren zum anschließenden Kodieren der Daten.

2. System gemäß Anspruch 1, wobei die Daten durch das Vorhandensein oder das Fehlen von Aufschlägen bei einer vorbestimmten Aufschlagrate kodiert werden.

3. System gemäß Anspruch 1 oder 2, wobei die Datenempfangs-Einrichtung (5) auf eine durchschnittliche Aufschlags-Baudrate größer als 20 Aufschläge pro Sekunde anspricht.

4. System gemäß einem der Ansprüche 1 bis 3, wobei die Datenübertragungseinrichtung (6) einen magnetspulenangetriebenen Triebkopf (3) zum Übertragen der mechanischen Aufschläge auf den Körper (4) aufweist.

5. System gemäß einem der Ansprüche 1 bis 4, wobei die Datenübertragungseinrichtung einen Teil einer Sensor-Einheit (29) bildet, wobei durch die Folge von Aufschlägen Information über einen abgetasteten Parameter kodiert wird, und wobei die Datenempfangs-Einrichtung Teil einer Datenerfassungseinheit (31) zum Erfassen der abgetasteten Information bildet.

6. System gemäß einem der Ansprüche 1 bis 4, wobei die Datenübertragungseinrichtung einen Teil eines Steuerungsmoduls (34) bildet, wobei durch die Folge von Aufschlägen Steuerungsdaten kodiert werden, und wobei die Datenempfangs-Einrichtung einer betätigbaren Komponente (36) zugeordnet ist, die auf den Empfang von Betätigungsdaten hin betätigt wird, die mittels des Steuerungsmoduls (34) übertragen worden sind.

7. System gemäß Anspruch 6, wobei das Steuermodul ein elektronisch gesteuerter Schlüssel (10) zum Aufschlagen einer kodierten Folge von Aufschlägen ist, durch die die Daten einer Zugangskombination kodiert sind, und wobei die betätigbare Komponente eine Zugangs-Steuereinrichtung ist.

8. System gemäß Anspruch 7, wobei die Zugangs-Steuereinrichtung ein Schloss (7) ist.

9. System gemäß einem der Ansprüche 1 bis 4 zum Übertragen von Daten zwischen zwei oder mehreren Datenverarbeitungs-Systemen (38, 39), wobei die Datenübertragungseinrichtung Teil eines ersten Datenverarbeitungs-Systems und die Datenempfangs-Einrichtung Teil eines zweiten Datenverarbeitungs-Systems sind, und wobei das erste Datenverarbeitungs-System ferner eine Datenempfangs-Einrichtung aufweist, die identisch mit der Datenempfangs-Einrichtung ist, und wobei das zweite Datenverarbeitungs-System ebenfalls eine Datenübertragungseinrichtung aufweist, die identisch mit der Datenübertragungseinrichtung ist.

10. System gemäß einem der Ansprüche 1 bis 8, wobei die Datenübertragungseinrichtung derart konfiguriert ist, dass sie tragbar ist.

11. System gemäß einem der Ansprüche 1 bis 10, aufweisend eine Fernbedienung zum Auslösen der Folge von Aufschlägen.

12. Datenübertragungseinrichtung (6) zur Kommunikation mit einer Datenempfangs-Einrichtung (5), wobei die Datenübertragungseinrichtung (6) eine elektronisch gesteuerte elektromagnetische Einrichtung mit einem aufschlagenden Triebkopf (3) aufweist, der sich in einer kodierten Weise hin- und her bewegen kann, um auf einen Aufschlagsübertragungskörper (4) aufzuschlagen und auf den Körper (4) eine Folge von impulsförmigen, mechanischen Aufschlägen zu übertragen, die mittels eines aufschlagempfindlichen Messwandlers (2) der Datenempfangs-Einrichtung (5) aufgenommen worden sind, wobei durch die Folge von Aufschlägen Daten kodiert werden, die von der Übertragungseinrichtung (6) zur Empfangseinrichtung (5) zu übertragen sind, wobei die Daten als Zeitintervalle zwischen aufeinanderfolgenden Aufschlägen der Folge kodiert sind.

13. Datenübertragungseinrichtung (6) gemäß Anspruch 12, wobei die Daten durch das Vorhandensein oder das Fehlen von Aufschlägen bei einer vorbestimmten Aufschlagrate kodiert werden.

14. Datenübertragungseinrichtung (6) gemäß Anspruch 12 oder 13, wobei die Daten mit einer Aufschlags-Baudrate größer als 20 Aufschläge pro Sekunde kodiert werden.

15. Datenübertragungseinrichtung (6) gemäß einem der Ansprüche 12 bis 14, aufweisend einen magnetspulenangetriebenen Triebkopf (3) zum Übertragen der mechanischen Aufschläge auf den Körper (4).

16. Datenübertragungseinrichtung gemäß einem der Ansprüche 12 bis 15, die als ein elektronisch gesteuerter Schlüssel (10) dient, wobei durch die Folge von Aufschlägen Zugangskombinationsdaten kodiert werden.

17. Datenübertragungseinrichtung (6) gemäß einem der Ansprüche 12 bis 16, die derart konfiguriert ist, dass sie tragbar ist.

18. Datenübertragungseinrichtung (6) gemäß einem der Ansprüche 12 bis 17, aufweisend eine Nutzerschnittstelle zum Auslösen der Folge von Aufschlägen.

19. Einrichtung gemäß einem der Ansprüche 12 bis 16, aufweisend eine Fernbedienung zum Auslösen der Folge von Aufschlägen.

20. Einrichtung gemäß einem der Ansprüche 12 bis 19, wobei die Einrichtung die Datenempfangs-Einrichtung aufweist.

21. Verfahren zur Datenübertragung zu einer Datenempfangs-Einrichtung (5), aufweisend einen aufschlagempfindlichen Messwandler (2), mittels dessen empfangene Vibrationen aufgenommen werden, **gekennzeichnet dadurch**:
(a) dass bei einer Datenübertragungseinrichtung (6), von der die Daten in eine Folge von impulsförmigen mechanischen Aufschlägen kodiert werden, die Daten als Zeitintervalle zwischen aufeinanderfolgenden Aufschlägen der Folge mittels einer elektronisch gesteuerten elektromagnetischen Einrichtung mit einem Triebkopf (3) kodiert werden, der sich hin- und her bewegen kann, um so auf einen Aufschlagübertragungskörper (4) aufzuschlagen und Aufschläge auf den Aufschlagübertragungskörper (4) zu schlagen;
(b) dass bei der Datenempfangs-Einrichtung (5), aufweisend den aufschlagempfindlichen Messwandler (2), von dem Körper (4) Vibrationen aufgenommen werden, die von einer Folge von impulsförmigen mechanischen Aufschlägen resultieren und die Daten kodiert werden.

22. Verfahren gemäß Anspruch 21, wobei die Daten in das Vorhandensein oder Fehlen von Aufschlägen bei einer vorbestimmten Aufschlagrate kodiert werden.

23. Verfahren der Anspruch 21 oder 22, wobei die Aufschläge eine durchschnittliche Baudrate von 20 Aufschlägen pro Sekunde oder mehr aufweisen.

24. Verfahren gemäß einem der Ansprüche 21 bis 23, wobei die Datenübertragungseinrichtung einen Teil einer Sensor-Einheit (29) bildet, wobei die Datenempfangs-Einrichtung einen Teil einer Datenerfassungseinheit (31) bildet, und wobei durch die Folge von Aufschlägen die Information in einem aufgenommenem Parameter kodiert wird.

25. Verfahren gemäß einem der Ansprüche 21 bis 23, wobei die Datenübertragungseinrichtung einen Teil eines Steuerungsmoduls (34) bildet, wobei die Datenempfangs-Einrichtung einer betätigbaren Komponente (36) zugeordnet ist, wobei durch die Folge von Aufschlägen Steuerungsdaten zum Betätigen der betätigbaren Komponente (36) kodiert werden.

26. Verfahren gemäß Anspruch 25, wobei das Steuerungsmodul ein elektronisch gesteuerter Schlüssel (10) ist, wobei die betätigbare Komponente eine Zugangs-Steuereinrichtung ist, und wobei durch die Folge von Aufschlägen Zugangskombinationsdaten kodiert werden.

27. Verfahren gemäß einem der Ansprüche 21 bis 23, wobei die Datenübertragungseinrichtung und die Datenempfangs-Einrichtung jeweils einem Datenverarbeitungs-System zugeordnet sind, und wobei durch die Folge von Aufschlägen Daten kodiert werden, die von der Datenübertragungseinrichtung in einem Datenverarbeitungs-System zu der Datenempfangs-Einrichtung in einem anderen Datenverarbeitungs-System zu übertragen sind.

## Revendications

1. Système de transmission de données comprenant un dispositif (5) de réception de données, qui comporte un transducteur (2) sensible aux impacts pour capter des vibrations reçues, **caractérisé en ce que** :
(a) il est prévu un dispositif (6) d'émission de données, qui comprend un dispositif électromagnétique commandé électroniquement, comportant une tête de frappe (3) de production d'impacts, qui peut se déplacer en va-et-vient de manière à appliquer des impacts à un corps (4) de transmission d'impacts et transmettre audit corps (4) une série d'impacts mécaniques de type impulsionnel, lesdites données étant codées en tant qu'intervalles de temps entre des impacts successifs de ladite série;
(b) le transducteur (2) sensible aux impacts est apte à capter, à partir du corps (4) de transmission d' impacts, des vibrations résultant de ladite série d'impacts mécaniques de type impulsionnel pour ensuite décoder lesdites données.

2. Système selon la revendication 1, dans lequel lesdites données sont codées par la présence ou l'absence d'impacts à une cadence d'impacts prédéterminée.

3. Système selon la revendication 1 ou 2, dans lequel ledit dispositif (5) de réception de données est apte à répondre à une cadence moyenne en bauds d'impacts, supérieure à 20 impacts par seconde.

4. Système selon l'une quelconque des revendications 1 à 3, dans lequel ledit dispositif (6) d'émission de données comprend une tête de frappe (3) activée par un électroaimant et servant à transmettre lesdits impacts mécaniques audit corps (4).

5. Système selon l'une quelconque des revendications 1 à 4, dans lequel ledit dispositif d'émission de données fait partie de moyens de détection (29), ladite série d'impacts code une information sur un paramètre détecté, et ledit dispositif de réception de données fait partie de moyens (31) de collecte de données pour collecter l'information détectée.

6. Système selon l'une quelconque des revendications 1 à 4, dans lequel ledit dispositif d'émission de données fait partie d'un module de commande (34), ladite série d'impacts code des données de commande et ledit dispositif de réception de données est associé à un composant pouvant être actionné (36), qui est actionné lors de la réception d'une donnée d'actionnement transmise par ledit module de commande (34).

7. Système selon la revendication 6, dans lequel ledit module de commande est une clé (10) commandée électroniquement pour appliquer une série codée d'impacts codant une donnée de combinaison d'accès, et ledit composant pouvant être actionné est un dispositif de commande d'accès.

8. Système selon la revendication 7, dans lequel ledit dispositif de commande d'accès est un verrou (7).

9. Système selon l'une quelconque des revendications 1 à 4, pour la transmission de données entre deux ou plus de deux systèmes de traitement de données (38, 39), dans lequel le dispositif d'émission de données fait partie d'un premier système de traitement de données et le dispositif de réception de données fait partie d'un second système de traitement, et dans lequel le premier système de traitement de données comporte en outre un dispositif de réception de données qui est identique au dispositif de réception de données, et le second système de traitement de données comprend également un dispositif d'émission de données qui est identique au dispositif d'émission de données.

10. Système selon l'une quelconque des revendications 1 à 8, dans lequel ledit dispositif d'émission de données est configuré de manière à être tenu à la main.

11. Système selon l'une quelconque des revendications 1 à 10, comprenant une télécommande pour activer la série d'impacts.

12. Dispositif (6) d'émission de données pour communiquer avec un dispositif (5) de réception de données, le dispositif (6) d'émission de données comprenant un dispositif électromagnétique à commande électronique, comportant une tête de frappe (3) de production d'impacts, qui peut se déplacer en va-et-vient d'une manière codée de manière à appliquer un impact à un corps (4) de transmission d'impacts et transmettre audit corps (4) une série d'impacts mécaniques de type impulsionnel, devant être captés par un transducteur (2) sensible aux impacts du dispositif (5) de réception de données, la série d'impacts codant des données devant être transmises du dispositif d'émission (6) au dispositif de réception (5), les données étant codées en tant qu'intervalles de temps entre des impacts consécutifs de la série.

13. Dispositif (6) d'émission de données selon la revendication 12, dans lequel lesdites données sont codées par la présence ou l'absence d'impacts à une cadence prédéterminée d'impacts.

14. Dispositif (6) d'émission de données selon la revendication 12 ou 13, dans lequel lesdites données sont codées à une cadence d'impacts en bauds supérieure à 20 impacts par seconde.

15. Dispositif (6) d'émission de données selon l'une quelconque des revendications 12 à 14, comprenant une tête de frappe (3) activée par un électroaimant pour transmettre lesdits impacts mécaniques audit corps (4).

16. Dispositif (6) d'émission de données selon l'une quelconque des revendications 12 à 15, servant de clé à commande électronique (10), dans lequel la série d'impacts code une donnée de combinaison d'accès.

17. Dispositif (6) d'émission de données selon l'une quelconque des revendications 12 à 16, configuré de manière à être tenu à la main.

18. Dispositif (6) d'émission de données selon l'une quelconque des revendications 12 à 17, comprenant une interface d'utilisateur pour activer ladite série d'impacts.

19. Dispositif (6) selon l'une quelconque des revendications 12 à 16, comprenant une télécommande pour activer ladite série d'impacts.

20. Dispositif (6) d'émission de données selon l'une quelconque des revendications 12 à 19, dans lequel ledit dispositif comprend ledit dispositif de réception de données.

21. Procédé pour transmettre des données à un dispositif (5) de réception de données, comprenant un transducteur (2) sensible à des impacts et au moyen duquel des vibrations reçues sont captées, **caractérisé par** :
(a) dans un dispositif (6) d'émission de données, le codage desdites données dans une série d'impacts mécaniques de type impulsionnel, les données étant codées en tant qu'intervalles de temps entre des impacts successifs de ladite série au moyen d'un dispositif électromagnétique à commande électronique comportant une tête de frappe (3) qui peut se déplacer en va-et-vient de manière à frapper un corps (4) de transmission d'impacts, et l'application desdits impacts audit corps (4) apte à transmettre des impacts,
(b) dans le dispositif (5) de réception de données comportant le transducteur (2) sensible aux impacts, le captage, à partir dudit corps (4), de vibrations résultant de ladite série d'impacts mécaniques de type impulsionnel et le décodage desdites données.

22. Procédé selon la revendication 21, dans lequel les données sont codées en présence ou en absence d'impacts à une cadence d'impacts prédéterminée.

23. Procédé selon la revendication 21 ou 22, dans lequel les impacts possèdent une cadence moyenne en bauds de 20 impacts par seconde ou plus.

24. Procédé selon l'une quelconque des revendications 21 à 23, dans lequel le dispositif de transmission de données fait partie de moyens de détection (29), ledit dispositif de réception de données fait partie de moyens (31) de collecte de données et ladite série d'impacts code l'information concernant un paramètre détecté.

25. Procédé selon l'une quelconque des revendications 21 à 23, selon lequel ledit dispositif d'émission de données fait partie d'un module de commande (34), ledit dispositif de réception de données est associé à un composant pouvant être actionné (36), ladite série d'impacts codant des données de commande pour l'actionnement dudit composant pouvant être actionné (36).

26. Procédé selon la revendication 25, dans lequel le module de commande est une clé commandée électroniquement (10), ledit composant pouvant être actionné est un contrôleur d'accès et ladite série d'impacts code des données de combinaison d'accès.

27. Procédé selon l'une quelconque des revendications 21 à 23, selon lequel ledit dispositif d'émission de données et ledit dispositif de réception de données sont associés chacun à un système de traitement de données, et ladite série d'impacts code les données devant être transmises depuis le dispositif d'émission de données dans un système de traitement de données au dispositif de réception de données dans l'autre système de traitement de données.
